Europäisches Patentamt

European Patent Office

Office européen des brevets

(19)

(11) Numéro de publication : **0 320 400 B1**

(12) **FASCICULE DE BREVET EUROPEEN**

(45) Date de publication du fascicule du brevet :
**12.08.92 Bulletin 92/33**

(51) Int. Cl.⁵ : **B60G 11/08**

(21) Numéro de dépôt : **88403133.7**

(22) Date de dépôt : **09.12.88**

(54) **Suspension pour vehicules.**

(30) Priorité : **11.12.87 FR 8717284**

(43) Date de publication de la demande :
**14.06.89 Bulletin 89/24**

(45) Mention de la délivrance du brevet :
**12.08.92 Bulletin 92/33**

(84) Etats contractants désignés :
**AT BE CH DE ES FR GB GR IT LI LU NL SE**

(56) Documents cités :
**EP-A- 0 243 102
DE-B- 1 924 175
FR-A- 2 552 375
GB-A- 172 417
US-A- 3 913 941**

(73) Titulaire : **BERTIN & CIE
Zone Industrielle Boîte postale 3
F-78373 Plaisir Cédex (FR)**

(72) Inventeur : **Sayers, Kenneth Herbert
26 Place aux Herbes
F-78640 Neauphle-le-Château (FR)**
Inventeur : **Dutertre, Bernard Maurice Pierre
14 Rue du Château
F-92200 Neuilly-sur-Seine (FR)**

(74) Mandataire : **Colas, Jean-Pierre et al
Cabinet de Boisse 37, avenue Franklin D.
Roosevelt
F-75008 Paris (FR)**

EP 0 320 400 B1

Jouve, 18, rue Saint-Denis, 75001 PARIS

## Description

L'invention concerne une suspension pour véhicules, notamment à roues indépendantes, du type comportant une lame élastique à section d'aire constante d'une extrémité à l'autre, dont au moins une desdites extrémités est rigidifiée par des moyens formant bras de suspension, ledit bras étant articulé d'une part sur le châssis et d'autre part sur le support de roue.

On connaît du brevet US-A-2 460 106 une suspension à lame comportant une lame élastique d'épaisseur et de largeur constante, dont les extrémités sont fixées rigidement à l'aide d'une contreplaque et de boulons, à des bras de suspension rigides. Les bras sont articulés à l'une de leurs extrémités à des biellettes elles-mêmes articulées à des supports fixés au châssis et à l'autre extrémité, au support de roue.

Les efforts venant de la structure sont transmis par les biellettes aux bras de suspension qui agissent eux-mêmes sur les extrémités de la lame.

Du fait de la liaison rigide entre la lame et le bras de suspension, la distance séparant les extrémités de la lame varie lors de la modification de sa courbure, sous l'effet de la charge ou des irrégularités du terrain. Cette variation entraîne une variation de la voie du train du véhicule qui doit être absorbée par des manchons élastiques prévus sur l'axe maintenant au moins une des biellettes au support de roue.

Le dispositif décrit dans le brevet précité est complexe, du fait de l'utilisation d'au moins trois biellettes, pour la mise en oeuvre du bras de suspension monté sur la lame élastique.

On connaît aussi de FR-A-2 552 375, correspondant au préambule de la revendication 1, une suspension de roue à lame élastique en matériau composite fibreux, connectée à des bras transversaux de support de roue par des bras de guidage munis de moyens de serrage des extrémités de la lame. Il s'agit là encore d'un dispositif complexe qui ne permet pas, en outre, de moduler la raideur de la suspension.

L'invention vise à fournir une suspension plus simple permettant l'utilisation de moyens conditionnant le déplacement longitudinal de la lame et par conséquent le réglage de la dureté de la suspension.

La suspension pour véhicules, selon l'invention, comprenant une lame en matériau composite à fibres unidirectionnelles continues s'étendant d'une extrémité à l'autre de la lame, est remarquable en ce que cette lame présente une portion d'extrémité dont la section est de forme constante, qui s'emboîte dans une cavité de section correspondante ouverte d'un seul côté, ménagée dans ledit bras de suspension et s'étendant sur la majeure partie de la longueur du bras, la transmission d'efforts entre lame et bras étant ainsi limitée à trois moments d'encastrement résultant de forces perpendiculaires aux fibres unidirectionnelles de ladite lame, la suspension comprenant en outre des moyens conditionnant le déplacement longitudinal relatif entre la portion d'extrémité de la lame mobile dans la cavité du bras et ledit bras.

Les explications et figures données ci-après à titre d'exemples permettront de comprendre comment l'invention peut être réalisée.

Les figures 1A et 1B représentent, vue de face et de dessus, une suspension selon un exemple de réalisation de l'invention.

La figure 2 est une vue en perspective d'une partie de suspension selon une deuxième forme de réalisation.

Les figures 3A, 3B, 3C sont des vues en coupe selon AA, BB, CC de la figure 2.

La figure 4 est une vue en perspective d'un bras de suspension selon une réalisation particulière.

Les figures 5A, 5B, 5C, 5D, 5E représentent schématiquement différentes formes de réalisation des moyens conditionnant le déplacement longitudinal de la lame.

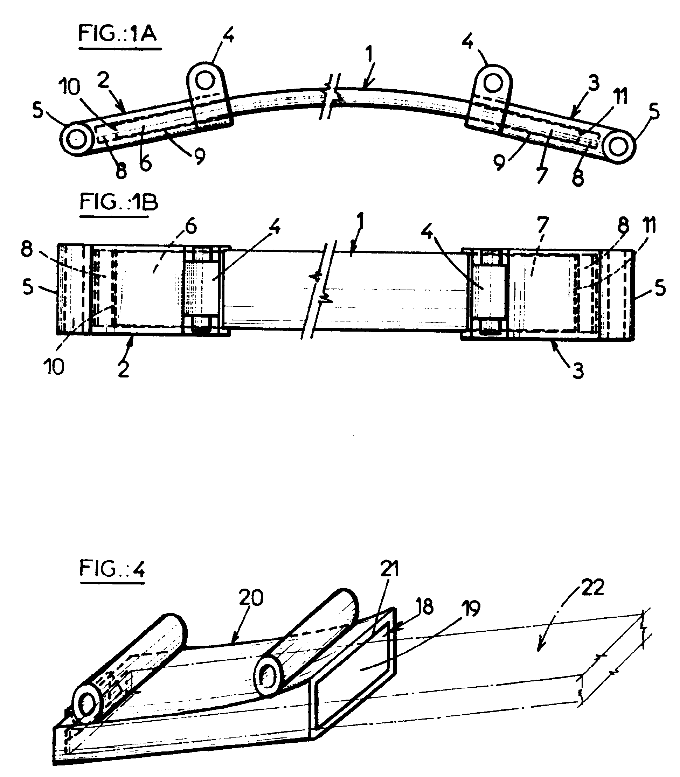

La suspension selon une forme de réalisation de l'invention représentée figures 1A, 1B, destinée à un véhicule à roues indépendantes, comporte une lame élastique 1 dont les extraités sont rigidifiées par des moyens formant bras de suspension 2, 3. Les bras de suspension sont pourvus à chacune de leurs extrémités, d'attaches 4, 5 qui coopèrent avec des moyens complémentaires, non représentés, respectivement prévus sur le châssis et sur le support de roue.

Selon une forme de réalisation de la lame élastique, celle-ci a une largeur et une épaisseur constante et est de section rectangulaire. Elle est de préférence constituée d'un matériau composite à fibres unidirectionnelles continues s'étendant d'une extrémité à l'autre de la lame.

Les portions d'extrémité 6 et 7 de la lame sont emboîtées dans des cavités 8 de section correspondante s'étendant sur au moins la majeure partie de la longueur du bras.

Les dimensions intérieures d'au moins une partie de la cavité du bras sont telles qu'entre les faces latérales des portions d'extrémité 6, 7 de la lame et les parois des cavités, il y a un espace suffisant pour loger au moins une partie des moyens 9, 26, 27, 30, 31, 32 conditionnant le déplacement longitudinal relatif entre lesdites faces et parois. Ces dits moyens seront décrits ultérieurement.

La coopération entre les faces latérales des portions d'extrémité de la lame et les parois des cavités par l'intermédiaire des moyens conditionnant le déplacement longitudinal, permet une transmission des efforts entre la lame et les bras, limitée à trois moments d'encastrement dont les composantes sont des forces perpendiculaires aux fibres unidirectionnelles de la lame.

Lorsque les cavités traversent de part en part les bras, il est prévu dans la cavité, une butée qui lorsque la suspension est dans la position de repos, se trouve à une distance déterminée des faces d'extrémité 10 et 11 de la lame, de manière à limiter le déplacement longitudinal de l'extrémité de la lame et par conséquent le débattement vertical de la suspension lorsque celle-ci est sollicitée. Lorsque les cavités ne traversent pas les bras, la distance séparant les faces d'extrémité de la lame des fonds des cavités, a le même rôle que dans le cas précédent.

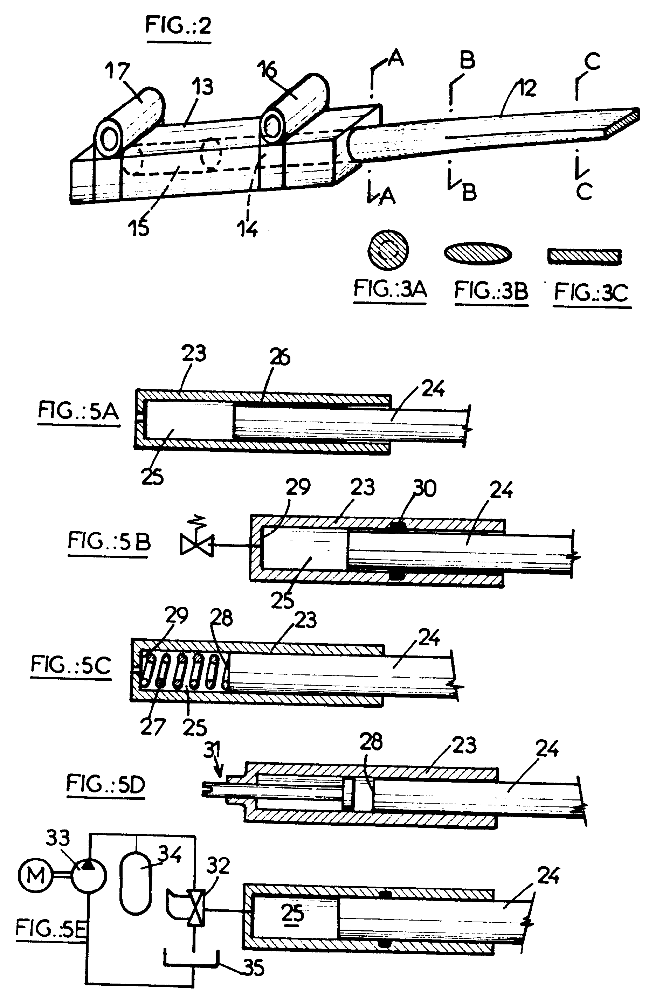

Selon une autre forme de réalisation de la lame, telle que représentée partiellement figure 2, celle-ci indiquée par le signe de référence 12) a une forme évolutive de section constante au moins dans la portion libre comprise entre les deux bras 13. Les coupes, figures 3A à 3C, montrent les variations de forme des sections, celle-ci passant du rectangle au cercle. La portion d'extrémité 14 de la lame est cylindrique pleine ou tubulaire et pénètre dans une cavité 15 également cylindrique du bras 13.

Dans la réalisation de la figure 2, les attaches 17 de la suspension au support de roue, sont disposées sur le même côté du bras que les attaches 16 au châssis et non plus en bout comme dans l'exemple de la figure 1.

Les formes de la portion d'extrémité 6, 7 de lame, s'emboîtant dans la cavité du bras, ne sont pas limitées aux sections rectangulaire et circulaire précédemment décrites, mais peuvent avoir toute forme compatible avec un déplacement longitudinal limité entre la lame et le bras.

Selon une autre forme de réalisation de bras de suspension montrée figure 4, l'ouverture 18 de la cavité 19, formée dans le bras 20, présente au moins une partie évasée 21 susceptible de coopérer avec la lame 22, lors d'un débattement vertical, pour assurer un raidissement progressif de la suspension. L'évasement de l'ouverture est prévu pour une lame de largeur et d'épaisseur constante et se trouve placé à la partie supérieure du bras. Pour des sections autres que rectangulaires, l'évasement est adapté à la forme de la portion d'extrémité de lame s'engageant dans le bras.

Les bras sont réalisés en tout matériau rigide, métallique, synthétique ou composite, par des techniques adaptées à l'usinage ou au moulage du matériau choisi.

Les moyens 9 conditionnant le déplacement longitudinal relatif entre la portion d'extrémité 6, 7 de la lame de suspension 1 et les bras de suspension 2, 3 vont être ci-après décrits par rapport aux schémas des figures 5A à 5E. Dans ces schémas, les bras de suspension sont désignés de manière générale par la référence 23, la portion d'extrémité de lame par 24 et la cavité par 25.

Les moyens 9 conditionnant le déplacement longitudinal, peuvent être en deux parties distinctes, l'une 26, interposée entre les surfaces périphériques de la portion d'extrémité 24 de lame et de la paroi périphérique de la cavité 25, et l'autre 27, dans la cavité, entre la face d'extrémité 28 de la lame et le fond 29 de la cavité 25. Ces parties de moyens peuvent être utilisées isolément ou en combinaison.

Selon le type de suspension que l'on désire, on choisit comme moyens 26, un matériau ou produit qui présente un faible coefficient de frottement, tels par exemple : le PTFE, le bisulfure de molybdène, etc, ou une couche élastique adhérente, tel par exemple, un élastomère que permettra de limiter le déplacement longitudinal et réalisera une suspension amortie à raideur progressive (figure 5A).

Les surfaces périphériques de la portion d'extrémité 24 et les parois de la cavité 25 sont séparées par un joint glissant 30 (figure 5B) qui assure éventuellement l'étanchéité et permet, par exemple, la compression de l'air emprisonné entre la face d'extrémité 28 de la lame et le fond 29 de la cavité 25 pour durcir progressivement la suspension et former un dispositif passif de rappel élastique.

Un autre type de moyens 27 conditionnant le déplacement de la lame est représenté figure 5C et est formé par un dispositif élastique mécanique te, par exemple, qu'un ressort hélicoïdal ou un plot en élastomère.

Les divers moyens précédemment cités, constituent également un dispositif d'amortissement susceptible de freiner les déplacements longitudinaux relatifs de la lame dans la cavité du bras.

Un autre type de moyens 27 et montré figure 5D et est constitué d'un vérin 31 dont l'extrémité vient en contact avec la face d'extrémité 28 de la lame et permet de régler le déplacement longitudinal de la portion d'extrémité de la lame dans le bras et donc le débattement de la suspension.

Les moyens montrés figures 5E comprennent un dispositif de commande représenté par une vanne 32 d'alimentation de la chambre à volume variable, délimité dans la cavité 25 par le fond 29 de ladite cavité et la face d'extrémité 28 de la lame. Ladite vanne est prévue pour être actionnée en fonction de paramètres représentant des conditions de chargement et/ou de conduite déterminées.

On a représenté schématiquement, une centrale hydraulique classique, susceptible d'alimenter ladite chambre à volume variable par la vanne de contrôle 32, comprenant entre autre, une pompe 33 et son moteur M, un accumulateur hydropneumatique 34 et une bâche 35.

Les principaux avantages que présente la suspension selon l'invention sont les suivants :
– la flexibilité de la suspension est presque entièrement assurée par la partie centrale de la lame ;
– la forme et la rigidité des bras permettent de transmettre les efforts dans les trois directions, puisque les bras rendent les extrémités de la lame rigides ;
– les fonctions ressort et anti-roulis sont assurées par la disposition géométrique et élastique de la lame ;
– le montage de l'ensemble lame, bras est simple ;
– enfin, les coûts de fabrication et de montage sont plus faibles que pour les suspensions antérieurement connues.

## Revendications

1. Suspension pour véhicules, notamment à roues indépendantes, du type comportant une lame élastique à section d'aire constante d'une extrémité à l'autre et constituée en un matériau composite à fibres unidirectionnelles s'étendant d'une extrémité à l'autre de la lame, au moins une de ces extrémités étant rigidifiée par un bras de suspension (2, 3; 13; 20; 23) articulé d'une part sur le châssis du véhicule et d'autre part sur un support de roue, ladite lame (1; 12; 22) présentant une portion d'extrémité (6, 7, 14; 24) dont la section est de forme constante, caractérisée en ce que ladite portion d'extrémité de la lame s'emboîte dans une cavité (8; 15; 19; 25) de section correspondante ouverte d'un seul côté, ménagée dans ledit bras de suspension (2, 3; 13; 20; 23) et s'étendant sur la majeure partie de la longueur du bras (2, 3; 13; 20; 23), la transmission d'efforts entre lame et bras étant ainsi limitée à trois moments d'encastrement résultant de forces perpendiculaires aux fibres unidirectionnelles de la lame, la suspension comprenant en outre des moyens (9, 26, 27, 30, 31; 32) conditionnant le déplacement longitudinal relatif entre la portion d'extrémité (6, 7; 14; 24) de la lame mobile dans la cavité (8; 15; 19; 25) du bras et ledit bras.

2. Suspension selon la revendication 1, caractérisé en ce que la forme de la section de la portion de la lame (12), située entre les deux bras (2, 3) est évolutive.

3. Suspension selon la revendication 1 ou 2, caractérisée en ce que l'ouverture (18) de la cavité (19) présente au moins une partie de paroi évasée (21) susceptible de coopérer avec la lame (22) lors d'un débattement vertical, pour assurer un raidissement progressif.

4. Suspension selon la revendication 1 ou 2, caractérisée en ce que la section de la portion d'extrémité (6, 7) de la lame (1) est délimitée par une courbe fermée continue ou polygonale.

5. Suspension selon la revendication 1 ou 2, caractérisée en ce que la section de la portion d'extrémité (14) de la lame (12) est circulaire.

6. Suspension selon la revendication 1, caractérisée en ce que lesdits moyens (9, 26, 30) sont interposés entre la surface périphérique de la portion d'extrémité (24) de la lame (22) et la paroi périphérique de la cavité (25).

7. Suspension selon la revendication 6, caractérisée en ce que lesdits moyens (9, 26) comprennent un matériau ou produit à faible coefficient de frottement.

8. Suspension selon la revendication 6, caractérisée en ce que lesdits moyens (9, 26) comprennent une couche élastique (26) adhérente.

9. Suspension selon la revendication 6, caractérisée en ce que lesdits moyens (9, 26, 30) comprennent un joint glissant (30) éventuellement étanche.

10. Suspension selon la revendication 1, caractérisée en ce que lesdits moyens (9, 27, 31) sont interposés entre la face d'extrémité (28) de la lame, perpendiculaire aux fibres, et le fond (29) de la cavité du bras.

11. Suspension selon la revendication 10, caractérisée en ce que lesdits moyens (9, 27) comprennent un dispositif passif de rappel élastique.

12. Suspension selon la revendication 10, caractérisée en ce que lesdits moyens (9, 27, 31) comprennent un dispositif d'amortissement à vérin 31 susceptible de freiner les déplacements longitudinaux relatifs de la lame (22) dans la cavité (25) du bras (23).

13. Suspension selon la revendication 10, caractérisée en ce que lesdits moyens (9, 32) comprennent un dispositif de commande (32) susceptible de contrôler les déplacements longitudinaux de la lame (22) dans la cavité (25) du bras (23).

## Patentansprüche

1. Radaufhängung für Fahrzeuge, insbesondere mit unabhängigen Rädern, mit einem Federblatt, das einen querschnitt konstanter Fläche von einem Ende bis zum anderen hat und aus einem Material besteht, das aus in einer Richtung verlaufenden fasern zusammengesetzt ist, die sich von einem Ende des Blattes bis zum anderen erstrecken, wobei mindestens eines dieser Enden durch einen Aufhängungsarm (2, 3; 13,; 20; 23) versteift ist, der einerseits am Fahrzeugrahmen und andererseits an einer Radabstützung angelenkt ist, wobei das Blatt (1; 12; 22) einen Endabschnitt (6, 7; 14; 24) aufweist, dessen querschnitt von konstanter form ist, dadurch gekennzeichnet, daß der besagte Endabschnitt des Blattes in einem nur zu einer Seite hin offenen Hohlraum (8; 15; 19; 25) eines entsprechenden Querschnittes aufgenommen ist, der in dem Aufhängungsarm (2, 3; 13; 20, 23) gebildet ist und sich über den größeren Teil der Länge des Armes (2, 3; 13; 20, 23) erstreckt, wobei die Übertragung der Kräfte zwischen Blatt und Arm somit auf drei Einspannmomente beschränkt ist, die von auf den gerichteten fasern des Blattes senkrecht stehenden Kräften herrühren, wobei die Aufhängung ferner Mittel (9, 26, 27, 30, 31; 32) aufweist, die die relative Längsverschiebung zwischen dem in dem Hohlraum (8; 15; 19; 25) des Armes beweglichen Endabschnittes (6, 7; 14; 24) des Blattes und dem Arm übereinflussen.

2. Radaufhängung nach Anspruch 1, dadurch gekennzeichnet, daß die Form des Querschnittes des zwischen den beiden Armen (2, 3) befindlichen Abschnittes des Blattes (12) veränderlich ist.

3. Radaufhängung nach Anspruch 1 oder 2, dadurch gekennzeichnet, daß die Öffnung (18) des Hohlraumes (19) mindestens einen erweiterten Wandabschnitt (21) aufweist, der mit dem Blatt (22) bei einer vertikalen Auslenkung zusammenwirken kann, um eine zunehmende'Versteifung sicherzustellen.

4. Radaufhängung nach Anspruch 1 oder 2, dadurch gekennzeichnet, daß der querschnitt des Endabschnittes (6, 7) des Blattes (1) von einer kontinuierlichen oder polygonalen geschlossenen Kurve begrenzt wird.

5. Radaufhängung nach Anspruch 1 oder 2, dadurch gekennzeichnet, daß der querschnitt des Endabschnittes (14) des Blattes (12) kreisförmig ist.

6. Radaufhängung nach Anspruch 1, dadurch gekennzeichnet, daß die besagten Mittel (9, 26, 30) zwischen der Umfangsfläche des Endabschnittes (24) des Blattes (22) und der Umfangswand des Hohlraumes (25) angeordnet sind.

7. Radaufhängung nach Anspruch 6, dadurch gekennzeichnet, daß die besagten Mittel (9, 26) aus einem Material oder Produkt eines geringen Reibbeiwertes bestehen.

8. Radaufhängung nach Anspruch 6, dadurch gekennzeichnet, daß die besagten Mittel (9, 26) aus einer haftenden elastischen Schicht (26) bestehen.

9. Radaufhängung nach Anspruch 6, dadurch gekennzeichnet, daß die besagten Mittel (9, 26, 30) aus einer gegebenenfalls dichten Gleitverbindung (30) bestehen.

10. Radaufhängung nach Anspruch 1, dadurch gekennzeichnet, daß die besagten Mittel (9, 27, 31) zwischen der senkrecht zu den fasern verlaufenden Endfläche (28) des Blattes und dem Boden (29) des Hohlraumes des Armes angeordnet sind.

11. Radaufhängung nach Anspruch 10, dadurch gekennzeichnet, daß die besagten Mittel (9, 27) aus einer passiven elastischen Rückholvorrichtung bestehen.

12. Radaufhängung nach Anspruch 10, dadurch gekennzeichnet, daß die besagten Mittel (9, 27, 31) aus einer Stoßdämpfervorrichtung (31) zum Abbremsen von relativen Längsverschiebungen des Blattes (22) im Hohlraum (25) des Armes (23) bestehen.

13. Radaufhängung nach Anspruch 10, dadurch gekennzeichnet, daß die besagten Mittel (9, 32) aus einer Steuervorrichtung (32) zum Steuern der Längsverschiebungen des Blattes (22) im Hohlraum (25) des Armes (23) bestehen.

**Claims**

1. Suspension for vehicles, especially with independent wheels, of the type comprising an elastic leaf which has a cross-section of an area constant from one end to the other and which is made of a composite material having continuous unidirectional fibres extending from one end of the leaf to the other, at least one of the said ends is made rigid by a suspension arm (2, 3; 13; 20; 23) articulated on the chassis of the vehicle on the one hand and on a wheel support on the other hand, the said leaf (1; 12; 22) having an end portion (6, 7; 14; 24) having a cross-section of constant form, characterized in that said leaf end portion fits into a cavity (8; 15; 19; 25) of corresponding cross-section opened on one side only, located within said suspension arm and extending over most of the length of the arm (2, 3; 13, 20; 23), the transmission of forces between the leaf and the arm thus being limited to three restraining moments, resulting from forces perpendicular to the unidirectional fibres of the said leaf, the suspension further comprising means (9, 26, 27, 30, 31; 32) for conditionning the relative longitudinal displacement between the leaf end portion (6, 7; 14; 24) movable with is the arm cavity (8; 15; 19; 25) and said arm.

2. Suspension according to claim 1, characterized in that the form of the cross-section of the portion of the leaf (12) located between the two arms (2, 3) is changing.

3. Suspension according to claim 1 or 2, characterized in that the orifice (18) of the cavity (19) has at least one widened wall part (21) capable of interacting with the leaf (22) during vertical deflection, in order to ensure progressive stiffening.

4. Suspension according to claim 1 or 2, characterized in that the cross-section of the end portion (6, 7) of the leaft (1) is delimited by a continuous or polygonal closed curve.

5. Suspension according to claim 1 or 2, characterized in that the cross-section of the end portion (14) of the leaf (12) is circular.

6. Suspension according to claim 1, characterized in that the said means (9, 26, 30) are interposed between the peripheral surface of the end portion (24) of the leaf (22) and the peripheral wall of the cavity (25).

7. Suspension according to claim 6, characterized in that the said means (9, 26) comprise a material or product having a low coefficient of friction.

8. Suspension according to claim 6, characterized in that the said means comprise an adhering elastic layer (26).

9. Suspension according to claim 6, characterized in that the said means (9, 26, 30) comprise one, if appropriate sealing sliding gasket (30).

10. Suspension according to claim 1, characterized in that the said means (9, 27, 31) are interposed between the leaf end face (28) perpendicular to the fibres and the bottom (29) of the cavity of the arm.

11. Suspension according to claim 10, characterized in that the said means (9, 27) comprise a passive elastic return device.

12. Suspension according to claim 10, characterized in that the said means (9, 27, 31) comprise a jack damping device (31) capable of braking the relative longitudinal movements of the leaf (22) in the cavity (25) of the arm (23).

13. Suspension according to claim 10, characterized in that the said means (9, 32) comprise a control device (32) capable of controlling the longitudinal movements of the leaf (22) in the cavity (25) of the arm (23).

FIG.:1A

FIG.:1B

FIG.:4

FIG.:2

FIG.:3A    FIG.:3B    FIG.:3C

FIG.:5A

FIG.:5B

FIG.:5C

FIG.:5D

FIG.:5E